## Europäisches Patentamt
## European Patent Office
## Office européen des brevets

(19)

(11) Veröffentlichungsnummer: **0 054 133**
**B1**

(12) **EUROPÄISCHE PATENTSCHRIFT**

(45) Veröffentlichungstag der Patentschrift:
**01.08.84**

(51) Int. Cl.³: **C 07 F 9/09,** C 07 F 9/11

(21) Anmeldenummer: **81108626.3**

(22) Anmeldetag: **21.10.81**

(54) **Verfahren zur Trennung eines Phosphorsäurealkylestergemisches durch Extraktion.**

(30) Priorität: **11.12.80 DE 3046631**

(43) Veröffentlichungstag der Anmeldung:
**23.06.82 Patentblatt 82/25**

(45) Bekanntmachung des Hinweises auf die Patenterteilung:
**01.08.84 Patentblatt 84/31**

(84) Benannte Vertragsstaaten:
**CH DE FR GB LI**

(56) Entgegenhaltungen:
**FR - A - 2 145 782**
**GB - A - 778 081**
**US - A - 2 658 909**
**US - A - 4 126 650**

(73) Patentinhaber: **HOECHST AKTIENGESELLSCHAFT,
Postfach 80 03 20, D-6230 Frankfurt am Main 80 (DE)**

(72) Erfinder: **Schimmel, Günther, Dr., Am Beissel 27,
D-5042 Erftstadt (DE)**
Erfinder: **Klose, Werner, Dr., Grachtstrasse 14,
D-5042 Erftstadt (DE)**

**Beschreibung**

Die Erfindung betrifft ein Verfahren zur Trennung eines Phosphorsäureester-Gemisches, wie es bei der Umsetzung eines aliphatischen $C_6$ bis $C_{12}$-Alkohols mit Phosphorpentoxid ($P_4O_{10}$) anfällt. Ein solches Gemisch kann je nach dem stöchiometrischen Verhältnis der Ausgangsstoffe und den Reaktionsbedingungen z.B. je 30-60 Gew.-% Phosphorsäuremonoalkylester und Phosphorsäuredialkylester neben 2-15 Gew.-% Diphosphorsäuredialkylester enthalten.

Während Gemische saurer Phosphorsäurealkylester eine breitgestreute Anwendung, z.B. als Reinigerkomponenten, Metallbearbeitungsflüssigkeiten und Emulgatoren finden, werden die reinen Phosphorsäuremono- oder dialkylester, z.B. als selektive Komplexierungsmittel zur Metallextraktion verwendet. Hier hat sich besonders Di(2-ethylhexyl)-phosphat als ca. 10 gewichtsprozentige Lösung in Kerosin bewährt.

Aufgabe der Erfindung ist es, ein einfaches Verfahren zur quantitativen Auftrennung des beschriebenen Phosphorsäurealkylester-Gemisches zu entwickeln. Besonders der Dialkylester sollte frei vom entsprechenden Monoalkylester sein.

Es ist bekannt, dass sich Phosphorsäuremono- und dialkylester aufgrund ihrer unterschiedlichen Struktur und Hydrophilie teilweise auftrennen lassen, wenn man die unterschiedlichen Verteilungskoeffizienten beider Stoffe zwischen zwei nicht miteinander mischbaren Lösungsmitteln ausnutzt.

So werden in der US-PS 2 658 909 wasserunlösliche organische Lösemittel beschrieben, die in Kombination mit Wasser oder Diethylenglykol eine partielle Auftrennung eines Gemisches aus Phosphorsäuremono- und dialkylestern auf die sich bildenden Phasen ermöglichen, wobei auch auf den Vorteil einer Arbeitsweise mit einer vielstufigen Gegenstromapparatur hingewiesen wird. In der GB-PS 778 081 wird als bevorzugtes Lösemittelpaar zur Aufspaltung der Phosphorsäurealkylesterkomponenten Monoethylenglykol und ein cycloaliphatischer oder aromatischer Kohlenwasserstoff empfohlen.

Bei einer einstufigen Extraktion gelingt jedoch die Trennung nur unvollständig, da ein Teil der abzutrennenden Komponente mit der Hauptkomponente in dieselbe Phase wandert. Deshalb ist zur vollständigen Scheidung ein mehrmaliges Waschen beider Extrakte mit jeweils frischen Lösemitteln erforderlich. Diphosphorsäuredialkylester besitzen ein noch weniger stark ausgeprägtes Selektivitätsverhalten als die entsprechenden Orthophosphorsäurealkylester. Es lässt sich sogar nachweisen, dass die Gegenwart eines Diphosphorsäuredialkylesters die Trennung der beiden anderen Ester auf die sich bildenden Phasen behindert (vgl. Beispiel 1 und 2 sowie 5 und 6), weshalb auch die Arbeitsweise in einer vielstufigen Gegenstromapparatur allein noch nicht genügt.

Im einzelnen betrifft die Erfindung nunmehr ein Verfahren zur Gewinnung von Phosphorsäuremonoalkylestern und Phosphorsäuredialkylestern mit jeweils 6-12 Kohlenstoffatomen im Alkylrest aus im wesentlichen diese und geringe Mengen Diphosphorsäuredialkylester enthaltenden Gemischen, wie sie bei der Umsetzung eines aliphatischen $C_6$- bis $C_{12}$-Alkohols mit Phosphorpentoxid anfallen, durch extraktive Verteilung zwischen einem aliphatischen oder aromatischen Kohlenwasserstoff als unpolarem Lösemittel und einem polaren Lösemittel, welches dadurch gekennzeichnet ist, dass man

a) das Estergemisch mit der für die Hydrolyse der P-O-P-Bindung des Diphosphorsäuredialkylesters unter Bildung von Phosphorsäuremonoalkylester stöchiometrisch erforderlichen Wassermenge versetzt, mindestens 1 Stunde bei Temperaturen oberhalb 60°C belässt und anschliessend

b) das teilhydrolysierte Estergemisch mit den untereinander nicht oder oder nur begrenzt mischbaren Lösemitteln im Gegenstrom n-stufig derart behandelt, dass in Stufe 1 und in Stufe n jeweils ein reines Lösemittel und in eine der dazwischenliegenden Stufen das teilhydrolysierte Estergemisch eindosiert werden, wobei «n» eine ganze Zahl von 3 bis 50 bedeutet.

Das Verfahren der Erfindung kann weiterhin wahlweise und bevorzugt dadurch gekennzeichnet sein, dass

c) in Teilschritt a) die Temperatur 80 - 100°C und die Hydrolysedauer 2-4 Stunden beträgt;

d) das unbehandelte Estergemisch je 30-60 Gew.-% Phosphorsäuremono- und dialkylester sowie 2-15 Gew.-% Diphosphorsäuredialkylester enthält;

e) man je Gewichtsteil teilhydrolysiertes Estergemisch 1-3 Gewichtsteile polares und 1-3 Gewichtsteile unpolares Lösemittel einsetzt;

f) man das teilhydrolysierte Estergemisch in die Stufe n/2 oder, wenn «n» eine ungerade Zahl bedeutet, in die Stufe n/2 + 1/2 eindosiert;

g) man das polare Lösemittel in die Stufe 1, das unpolare Lösemittel in die Stufe n und das teilhydrolysierte Estergemisch in eine dazwischenliegende Stufe eindosiert, die um so höher ist, je grösser die Zahl der Kohlenstoffatome im Alkylrest und das Mengenverhältnis von Phosphorsäuremono- zu Phosphorsäuredialkylester im teilhydrolysierten Estergemisch sind.

Für die Arbeitsweise im Gegenstrom empfiehlt sich die Verwendung einer Mixer/Settler-Batterie oder einer flüssig/flüssig-Extraktionskolonne mit festen oder bewegten Einbauten.

Als aliphatische oder aromatische Kohlenwasserstoffe (unpolare Lösemittel) kann man z.B. Petroläther (Kp. 20-60°C), Kerosin (Kp. 175-325°C), n-Hexan, Benzol, Toluol, Xylol, Mesitylen, Cyclohexan, Tetralin oder Decalin verwenden. Als polare Lösemittel kommen besonders Monoethylenglykol oder Wasser in Frage.

Unter einer flüssig/flüssig-Extraktionskolonne mit festen Einbauten sind Siebboden- oder Füllkörperkolonnen, unter solchen mit bewegten Einbauten sind z.B. Hubboden- oder Rührwerkskolonnen zu verstehen.

Auf die geschilderte Weise lässt sich eine äusserst selektive und weitgehend quantitative Auftrennung von Phosphorsäuremono- und dialkylestern erreichen, nachdem der als solcher nicht verwendbare Diphosphorsäuredialkylester vorab in Teilschritt a) an der P-O-P-Bindung mit Wasser zu je 2 Molekülen Phosphorsäuremonoalkylester hydrolytisch gespalten wurde, ohne dass eine merkliche Hydrolyse der Esterbindungen stattfindet.

Üblicherweise wird eine n-stufige extraktive Trennung mittels der flüssig/flüssig-Gegenstromtechnik derart durchgeführt, dass in Stufe 1 das zu trennende Gemisch in einem Lösemittel und in die n-te Stufe das Extraktionshilfsmittel eingeführt wird. Es zeigte sich aber bei der Durchführung des erfindungsgemässen Verfahrens, dass die Selektivität und Effektivität der Phosphorsäureester-Trennung wesentlich grösser ist, wenn man das teilhydrolysierte Estergemisch nicht in dem einen der Extraktionshilfsstoffe gelöst in die Apparatur eingibt, sondern direkt in das Mischorgan einer der mittleren Stufen eindosiert.

Besonders vorteilhaft kann das Verfahren der Erfindung zur Herstellung der für die Metallextraktion benötigten Lösungen von Phosphorsäuredialkylester in Kerosin angewendet werden. Zur Reinherstellung der beiden Ester (Mono- und Dialkylphosphat) können die Extraktionshilfsmittel Ethylenglykol und Kohlenwasserstoff aber auch abdestilliert und im Kreislauf zurückgeführt werden.

In den nachfolgenden Beispielen ist die Trennung mehrerer Estergemische beschrieben, wobei sowohl die Wirkung der Hydrolyse der P-O-P-Bindung anhand einstufiger Extraktionsversuche als auch die erfindungsgemässe Kombination der Partial-Hydrolyse (Teilschritt a) mit der Gegenstromextraktion (Teilschritt b) beschrieben wird.

Die Ermittlung der analytischen Daten erfolgte mittels P-Kernresonanz sowie Gesamt-P-Bestimmung. Die aufgeführten R- und S-Werte stellen ein Mass für die Qualität der Trennung dar. R bezeichnet die Extraktions-Effektivität und ist folgendermassen definiert:

$$R_{Mono} = \frac{\text{kg Monoester in Glykolphase}}{\text{kg eingebrachter Monoester}}$$

$$R_{Di} = \frac{\text{kg Diester in Kerosinphase}}{\text{kg eingebrachter Diester}}$$

S bezeichnet die Extraktions-Selektivität und kann als Reinheitsangabe der betreffenden Phase verstanden werden:

$$S_{Mono} = \frac{\text{(kg Monoester/kg Diester) in Glykol}}{\text{(kg Monoester/kg Diester) eingebracht}}$$

$$S_{Di} = \frac{\text{(kg Diester/kg Monoester) in Kerosin}}{\text{(kg Diester/kg Monoester) eingebracht}}$$

| | Gew.-% der Esterkomponenten | | | | R | | S | |
| | in Kerosin | | in Glykol | | | | | |
| Beispiel | Mono | Di | Mono | Di | Mono | Di | Mono | Di |
|---|---|---|---|---|---|---|---|---|
| 1 | 6,0 | 25,6 | 18,8 | 6,3 | 0,75 | 0,81 | 4,0 | 3,2 |
| 2 | 4,9 | 28,0 | 23,3 | 6,7 | 0,83 | 0,81 | 4,3 | 4,7 |
| 3 | 1,0 | 29,0 | 17,5 | 4,0 | 0,97 | 0,79 | 4,6 | 27,5 |
| 4 | 4,9 | 25,7 | 17,5 | 0,9 | 0,80 | 0,96 | 21,4 | 4,8 |
| 5 | 0,6 | 25,5 | 14,6 | 0,6 | 0,97 | 0,97 | 30,0 | 35,2 |
| 6 | 0 | 24,5 | 19,6 | 0,5 | 1,00 | 0,97 | 37,5 | ∞ |
| 7 | 0 | 21,5 | 22,3 | 3,5 | 1,00 | 0,88 | 8,1 | ∞ |
| 8 | 0,4 | 27,9 | 16,4 | 0,6 | 0,99 | 0,97 | 27,9 | 66,7 |
| 9 | 0,1 | 32,2 | 16,1 | 0,2 | 1,00 | 0,99 | 98,9 | 252,2 |

*Beispiel 1* (Vergleichsbeispiel)

Gleiche Gewichtsmengen Monoethylenglykol, Kerosin (Shellsol® T) und Estergemisch, enthaltend 36,3 Gew.-% Mono(2-ethylhexyl)phosphorsäureester, 46,2 Gew.-% Di(2-ethylhexyl)phosphorsäureester und 9,3 Gew.-% Di(2-ethylhexyl)diphosphorsäureester, werden 20 min intensiv gerührt. Man lässt absitzen und analysiert die beiden sich bildenden Phasen. Die Trennung ist in beiden Extrakten unvollständig. Die Kerosinphase enthält 2,3 Gew.-% Di(2-ethylhexyl)phosphorsäureester.

*Beispiel 2* (Vergleichsbeispiel)

Das in Beispiel 1 aufgeführte Estergemisch wird zur Hydrolyse der P-O-P-Bindung des Di(2-ethylhexyl)diphosphorsäureesters mit 1,5 Gew.-% Wasser versetzt und 3 Std. bei 80°C gehalten. Anschliessend wird wie in Beispiel 1 extrahiert. Die Auftrennung von Mono- und Diester ist wesentlich besser. In der Kerosinphase ist kein Di(2-ethylhexyl)diphosphorsäureester enthalten.

*Beispiel 3* (Vergleichsbeispiel)

In einer fünfstufigen Mixer/Settler-Batterie werden im Gegenstrom ständlich in Stufe 1 1000 g Monoethylenglykol und in Stufe 5 1300 g einer Kerosinlösung gefördert, die 50 Gew.-% einer Phosphorsäureestermischung [40,8 Gew.-% Mono(2-ethylhexyl)phosphorsäureester, 46,1 Gew.-% Di-(2-ethylhexyl)phosphorsäureester und 12,0 Gew.-% Di(2-ethylhexyl)diphosphorsäureester] enthält. Nur in der abfliessenden Kerosinphase findet eine einigermassen befriedigende Auftrennung von Mono- und Diester statt; sie enthält 0,7 Gew.-% Di(2-ethylhexyl)phosphorsäureester.

*Beispiel 4* (Vergleichsbeispiel)

In Abänderung von Beispiel 3 werden stündlich in Stufe 5 680 g Kerosin und in Stufe 1 1670 g einer Glykollösung gefördert, die 40 Gew.-% des in Beispiel 3 genannten Estergemisches enthält. Nur in der abfliessenden Glykolphase findet eine einigermassen befriedigende Auftrennung statt. Der Di(2-ethylhexyl)diphosphorsäureester ist zu etwa gleichen Teilen auf die Phasen verteilt.

*Beispiel 5* (Vergleichsbeispiel)

In einer fünfstufigen Mixer/Settler-Batterie werden stündlich 900 ml Monoethylenglykol in Stufe 1 und 900 ml Kerosin in Stufe 5 eingeführt. In den Mixer der Stufe 3 werden 480 ml/h eines Phosphorsäureestergemisches mit der Zusammensetzung aus Beispiel 1 dosiert. Die Trennung ist in beiden Phasen befriedigend, die Kerosinphase enthält 0,6 Gew.-% Di(2-ethylhexyl)diphosphorsäureester.

*Beispiel 6* (gemäss der Erfindung)

In Abänderung von Beispiel 5 wird das Phosphorsäureestergemisch, das nach Partial-Hydrolyse entsprechend Beispiel 2 erhalten wird, in Stufe 3 der Mixer/Settler-Batterie eingeführt. Die Trennung ist in beiden Phasen gut, die Kerosinphase ist frei von Di(2-ethylhexyl)diphosphorsäureester und mono(2-ethylhexyl)phosphorsäureester.

*Beispiel 7* (gemäss der Erfindung)

Ein Phosphorsäure-n-hexylester-Gemisch enthaltend 40,1 Gew.-% Monohexylphosphorsäureester, 50,8 Gew.-% Dihexylphosphorsäureester und 6,1 Gew.-% Dihexyldiphosphorsäureester wird zur Hydrolyse der P-O-P-Bindung des Dihexyldiphosphorsäureesters mit 2 Gew.-% Wasser 3 Stunden bei 80°C hydrolysiert. 500 ml/h dieses teilhydrolysierten Estergemisches werden in den Mixer 2 einer 5stufigen Mixer-Settler-Batterie eindosiert. Die stündlich geförderten Mengen an Kerosin und Monoethylenglykol betragen 1200 bzw. 600 ml. Die abfliessende Kerosinphase ist frei von Dihexyldiphosphorsäureester.

*Beispiel 8* (gemäss der Erfindung)

Man arbeitet entsprechend Beispiel 6, wobei man von einem Phosphorsäurenonylester-Gemisch ausgeht (41,8 Gew.-% Monononylphosphorsäureester, 48,9 Gew.-% Dinonylphosphorsäureester und 7,9 Gew.-% Dinonyldiphosphorsäureester), das 3 Stunden bei 80°C mit 1,5 Gew.-% Wasser hydrolysiert und sodann in einer Menge von 500 ml/h in den Mixer 3 einer 5stufigen Mixer/Settler-Apparatur eindosiert wird. Die stündlich geförderten Mengen an Kerosin und Glykol betragen 800 ml bzw. 1000 ml. Die Trennung ist in beiden Phasen gut.

*Beispiel 9* (gemäss der Erfindung)

Es wird wie in Beispiel 6 gearbeitet, mit dem Unterschied, dass statt Kerosin n-Hexan verwendet wird. Es werden 500 ml/h Phosphorsäureestergemisch eingesetzt. Nach beendeter Extraktion werden die beiden Phasen destillativ aufgearbeitet. Aus der Hexanphase wird bei 20°C und 100 Torr das Hexan abdestilliert. Zurück bleibt der Di(2-ethylhexyl)phosphorsäureester in mehr als 95%iger Reinheit. Aus der Glykolphase wird bei 62°C und 2 Torr das Glykol abdestilliert. Zurück bleibt der Mono(2-ethylhexyl)phosphorsäureester in 95%iger Reinheit (Bestimmt jeweils über P-NMR und Titration).

## Patentansprüche

1. Verfahren zur Gewinnung von Phosphorsäuremonoalkylestern und Phosphorsäuredialkylestern mit jeweils 6-12 Kohlenstoffatomen im Alkylrest aus im wesentlichen diese und geringe Mengen Diphosphonsäuredialkylestern enthaltenden Gemischen, wie sie bei der Umsetzung eines aliphatischen C$_6$- bis C$_{12}$-Alkohols mit Phosphorpentoxid anfallen, durch extraktive Verteilung zwischen einem aliphatischen oder aromatischen Kohlenwasserstoff als unpolarem Lösemittel und einem polaren Lösemittel, dadurch gekennzeichnet, dass man

a) das Estergemisch mit der für die Hydrolyse der P-O-P-Bindung des Diphosphorsäuredialkylesters unter Bildung von Phosphorsäuremonoalkylester stöchiometrisch erforderlichen Wassermenge versetzt, mindestens 1 Stunde bei Temperaturen oberhalb 60°C belässt und anschliessend

b) das teilhydrolysierte Estergemisch mit den untereinander nicht oder oder nur begrenzt mischbaren Lösemitteln im Gegenstrom n-stufig derart behandelt, dass in Stufe 1 und in Stufe n jeweils ein reines Lösemittel und in eine der dazwischenliegenden Stufen das teilhydrolysierte Estergemisch eindosiert werden, wobei «n» eine ganze Zahl von 3 bis 50 bedeutet.

2. Verfahren nach Anspruch 1, dadurch gekennzeichnet, dass in Teilschritt a) die Temperatur 80-100°C und die Hydrolysedauer 2-4 Stunden beträgt.

3. Verfahren nach Anspruch 1 oder 2, dadurch gekennzeichnet, dass das unbehandelte Estergemisch je 30-60 Gew.-% Phosphorsäuremono- und dialkylester sowie 2-15 Gew.-% Diphosphorsäuredialkylester enthält.

4. Verfahren nach einem der Ansprüche 1-3, dadurch gekennzeichnet, dass man je Gewichtsteil teilhydrolysiertes Estergemisch 1-3 Gewichtsteile polares und 1-3 Gewichtsteile unpolares Lösemittel einsetzt.

5. Verfahren nach einem der Ansprüche 1-4, dadurch gekennzeichnet, dass man das teilhydrolysierte Estergemisch in die Stufe n/2 oder, wenn «n» eine ungerade Zahl bedeutet, in die Stufe n/2 + 1/2 eindosiert.

6. Verfahren nach einem der Ansprüche 1-4, dadurch gekennzeichnet, dass man das polare Lösemittel in die Stufe 1, das unpolare Lösemittel in die Stufe n und das teilhydrolysierte Estergemisch in eine dazwischenliegende Stufe eindosiert, die um so höher ist, je grösser die Zahl der Kohlenstoffatome im Alkylrest und das Mengenverhältnis von Phosphorsäuremono- zu Phosphorsäuredialkylester im teilhydrolysierten Estergemisch sind.

## Claims

1. Process for recovering phosphoric acid monoalkylesters and phosphoric acid dialkylesters each with 6 to 12 carbon atoms in the alkyl radical from mixtures containing substantially these esters and slight proportions of diphosphoric acid dialkylesters, these being mixtures of the kind obtained by reacting an aliphatic C$_6$-C$_{12}$ alcohol with phosphorus pentoxide, by extractively distributing the esters between an aliphatic or aromatic hydrocarbon as an unpolar solvent and a polar solvent, which comprises:

a) admixing the ester mixture with the quantity of water stoichiometrically necessary for hydrolyzing the P-O-P-bond of the diphosphoric acid dialkylester with formation of the phosphoric acid monoalkylester, allowing the whole to remain for at least 1 hour at temperatures higher than 60°C, and

b) countercurrently treating in n stages the partially hydrolyzed ester mixture with the solvents, which are immiscible or only partially miscible with one another so as to ensure the introduction of pure solvent into stage 1 and stage n and the introduction of the partially hydrolyzed ester mixture into one of the intermediary stages, n standing for a whole number of 3 to 50.

2. Process as claimed in claim 1, wherein the temperature in partial step a) is 80 to 100°C and the hydrolysis is effected over a period of 2 to 4 hours.

3. Process as claimed in claim 1 or 2, wherein the untreated ester mixture contains 30 to 60 weight % each of phosphoric acid mono- and dialkylesters and 2 to 15 weight % of diphosphoric acid dialkylesters.

4. Process as claimed in any of claims 1 to 3, wherein 1 to 3 parts by weight polar solvent and 1 to 3 parts by weight unpolar solvent are used per part by weight partially hydrolyzed ester mixture.

5. Process as claimed in any of claims 1 to 4, wherein the partially hydrolyzed ester mixture is metered into stage n/2 or, in the event of n standing for an uneven number, into stage n/2 + 1/2.

6. Process as claimed in any of claims 1 to 4, wherein the polar solvent is metered into stage 1, the unpolar solvent is metered into stage n, and the partially hydrolyzed ester mixture is introduced into one of the intermediary stages lying at a level which is the higher the higher the number of carbon atoms in the alkyl radical and the higher the quantitative ratio of phosphoric acid monoalkylester to phosphoric acid dialkylester in the partially hydrolized ester mixture.

**Revendications**

1. Procédé de récupération de phosphates de monoalkyles et de phosphates de dialkyles ayant chaque fois 6-12 atomes de carbone dans le groupe alkyle à partir de mélanges contenant essentiellement ces phosphates et de faibles quantités de diphosphates de dialkyles, tels qu'ils sont obtenus lors de la réaction d'un alcool en $C_6$-$C_{12}$ avec l'anhydride phosphorique, par répartition extractive entre un hydrocarbure aliphatique ou aromatique comme solvant non polaire et un solvant polaire, caractérisé en ce que:

a) on ajoute au mélange d'esters la quantité d'eau stoechiométriquement nécessaire pour hydrolyser la liaison P-O-P du diphosphate de dialkyle avec formation de phosphate de monoalkyle, on laisse reposer pendant au moins 1 h à des températures supérieures à 60°C et

b) on traite ensuite à contre-courant en n étages le mélange d'esters partiellement hydrolysé avec les solvants non miscibles ou seulement partiellement miscibles l'un avec l'autre de manière à assurer le dosage du solvant pur dans chacun des étages 1 et n et du mélange des esters partiellement hydrolysé dans l'un des étages intermédiaires, n représentant un nombre entier de 3 à 50.

2. Procédé selon la revendication 1, caractérisé en ce que la température dans le stade partiel a) est de 80-100°C et la durée d'hydrolyse est de 2-4 h.

3. Procédé selon la revendication 1 ou 2, caractérisé en ce que le mélange des esters non traité contient chaque fois 30-60% en poids de phosphates de mono- et de dialkyles, ainsi que 2-15% en poids de diphosphate de dialkyles.

4. Procédé selon l'une des revendications 1 à 3, caractérisé en ce que l'on utilise 1-3 parties en poids de solvant polaire et 1-3 parties en poids de solvant non polaire par partie en poids du mélange d'esters partiellement hydrolysé.

5. Procédé selon l'une des revendications 1 à 4, caractérisé en ce que l'on dose le mélange d'esters partiellement hydrolysé dans l'étage n/2, si n représente un nombre impair, dans l'étage n/2 + 1/2.

6. Procédé selon l'une des revendications 1 à 4, caractérisé en ce que l'on dose le solvant polaire dans l'étage 1, le solvant non polaire dans l'étage n et le mélange d'esters partiellement hydrolysé dans l'un des étages intermédiaires, cet étage se trouvant à un niveau qui est d'autant plus élevé que le nombre des atomes de carbone dans le groupe alkyle et le rapport pondéral phosphates de monoalkyles/phosphates de dialkyles dans le mélange d'esters partiellement hydrolysé sont plus grands.